# EUROPÄISCHE PATENTSCHRIFT

(11) **EP 1 488 297 B1**
(45) Veröffentlichungstag und Bekanntmachung des Hinweises auf die Patenterteilung: **09.01.2008**
(21) Anmeldenummer: 03744808.1
(22) Anmeldetag: 18.03.2003
(51) Int. Cl.: G05D 16/20, F16K 31/06

(54) **DRUCKREGELVENTIL**
PRESSURE REGULATION VALVE
SOUPAPE REGULATRICE DE PRESSION

(30) Priorität: 22.03.2002 DE 10212806
(43) Veröffentlichungstag der Anmeldung: 22.12.2004
(73) Patentinhaber: ZF FRIEDRICHSHAFEN Aktiengesellschaft, 88038 Friedrichshafen (DE)
(72) Erfinder: BORNTRÄGER, Kai, 88212 Ravensburg (DE)
(86) Internationale Anmeldenummer: PCT/EP2003/002790
(87) Internationale Veröffentlichungsnummer: WO 2003/081363

(56) Entgegenhaltungen:
- DE-A- 19 904 902
- US-A- 3 865 128
- US-A- 4 665 945
- US-B1- 6 178 997

## Beschreibung

Die Erfindung betrifft ein Verfahren zur Regelung eines Drucks nach der im Oberbegriff von Anspruch 1 näher definierten Art.

Druckregelventile sind aus dem Stand der Technik vielfach bekannt; sie werden beispielsweise als Direktsteuerventile zum Ansteuern von Kupplungen in Automatgetrieben von Kraftfahrzeugen verwendet. Mit Hilfe dieser Druckregelventile müssen während den Schaltvorgängen Drücke bis 10 bar geregelt werden. In Automatgetrieben werden aber auch Drücke bis 24 bar beispielsweise für Haltepositionen bei Schaltelementen benötigt. Die Druckregelventile müssen auf die maximal auftretenden Drücke ausgelegt werden. Dies führt zu einer Verschlechterung der Druckauflösung, was zu einer ungenaueren Regelungsmöglichkeit führt. Weiterhin wird das Gesamtsystem auf den maximalen Druck ausgelegt, was dazu führt, daß nachträgliche Änderungen der Anforderungen an das Druckregelventil kaum nur unter erschwert durchführbar sind.

In der DE 199 04 902 A1 ist ein Druckregelventil beschrieben, das derart ausgeführt ist, daß in einer Halteposition des Magnetankers der kleinste axiale Abstand zwischen den beiden gegenüber angeordneten Stirnseiten des Magnetankers und des Magnetkerns derart bemessen ist, daß die Magnetkraft zwischen dem Magnetanker und dem Magnetkern in dieser Halteposition größer ist als die Magnetkraft im Arbeitsbereich des Proportional-Magneten und daß der Magnetanker durch die überhöhte Magnetkraft in dieser Halteposition feststellbar ist. Das in der DE 199 04 902 A1 beschriebene Druckregelventil nutzt dabei die Eigenschaft aus, daß ein Proportional-Magnet in seinem Arbeitsbereich eine nahezu waagerechte Kraft-Hub-Kennlinie aufweist und die Magnetkraft in einem Bereich unterhalb eines bestimmten Hubes, d. h. eines Abstandes zwischen Magnetanker und Magnetkern, gegenüber der Magnetkraft im Arbeitsbereich sprunghaft ansteigt. Durch diese Magnetcharakteristik mit großen Magnetkräften bei geringen Luftspalten kann durch entsprechende Magnetauslegung ein Spulenstrom bzw. ein "Schnappstrom" eingestellt werden, bei welchem der Arbeitsbereich des Magneten überfahren und der Magnetanker im Bereich der hohen Magnetkraft gehalten wird. Durch die Verbindung des Magnetankers über die Ankerstange mit dem Steuerelement wird somit auch die Haltekraft des Steuerelements derart erhöht, so daß dieses auch bei anstehendem hydraulischen Hauptdruck von ca. 24 bar zuverlässig in seiner Halteposition verbleibt, da die hydraulische Kraft, welche in der einen Richtung auf das Steuerelement wirkt, kleiner ist als die ihr entgegenwirkende magnetische Kraft. Zur Realisierung eines geringsten Abstandes zwischen dem Magnetkern und dem Magnetanker wird eine Distanzscheibe aus einem unmagnetischen Werkstoff zwischen dem Magnetkern und dem Magnetanker angeordnet. Durch eine derartige Scheibe, welche ein "magnetisches Kleben" des Magnetankers an dem Magnetkern verhindert, wird durch unterschiedliche Ausbildung der Scheibendicke eine Einstellbarkeit der Magnetkraft möglich. Die Magnetspule ist mit einer elektrischen Steuereinrichtung verbunden, welche in vorgebbaren zeitlichen Abständen einen Stromimpuls an die Magnetspule zur Aufrechterhaltung der Halteposition des Magnetankers abgibt. Damit wird sichergestellt, daß der Magnetanker seine Halteposition relativ zum Magnetkern beibehält und nicht unbeabsichtigt aus der Halteposition "abfällt" und daß das Steuerelement zuverlässig in seiner Halteposition verbleibt. Der Stromimpuls weist eine Stromstärke auf, welche einem Schnappstrom entspricht und größer ist als der Haltestrom der Magnetspule. Das Ventil wird so ausgelegt, daß die Schaltelemente bei einem unbeabsichtigtem Abfallen trotzdem geschlossen bleiben, d. h. der Regeldruck erhalten bleibt. Zum Lösen des Magnetankers aus der Halteposition wird die Magnetspule mit einem elektrischen Ansteuersignal beaufschlagt, welches beispielsweise als Reduktion und anschließendes Hochfahren des Steuerstroms in der Magnetspule erfolgt. Das Lösen des Magnetankers aus der Halteposition kann auch durch ein Drucksignal erfolgen, welches beispielsweise als eine Erhöhung des hydraulischen Hauptdrucks auf einen Wert oberhalb des Haltedrucks erfolgt und wobei die Druckerhöhung beispielsweise auf die Druckrückführung, insbesondere auf die Stirnseite der Kolbenbohrung, wirkt.

Das in der DE 199 04 902 A1 beschriebene Druckregelventil arbeitet mit einer magnetischen Haltefunktion, die durch eine Abtastung des Ankerstroms durch Diagnostizieren der Gegeninduktion aufgrund der Ankerbewegung erfolgt. Diese magnetische Haltefunktion birgt die Gefahr, daß aufgrund von auftretenden Druckpulsationen oder hohen Hauptdrücken der Magnetanker aus seiner Halteposition gedrückt werden kann und dadurch der Druck in Arbeitsleitungen auf ein tiefes Druckniveau fällt. Dies wiederum kann zu einer Fehlfunktion der Kupplungen führen. Die Darstellung einer wegabhängigen Haltefunktion über die Eigenschaften der Magnetkennlinie weist weiterhin den Nachteil auf, daß aufgrund von Verschmutzungen die Haltefunktion verschlechtert oder gar nicht mehr dargestellt werden kann. Nachteilig wirkt sich ebenfalls die Tatsache aus, daß das Druckregelventil ferner einen Ventilschieber aufweist, der druckabhängig seine Stellung verändern kann und durch Anliegen an einer Steuerkante den Druck in der Arbeitsleitung auf den maximalen Regeldruck begrenzt bei gleichzeitig erhöhter Leckage.

Aus der US 3,865,128 ist es bekannt, einen Regeldruck bei einer Kombination aus Druckregelventil und Schaltventil zurückzuführen. Dies dient jedoch lediglich dazu, einen vorbestimmten Druck an einem Ausgang aufrecht zu erhalten.

In der US 4,665,945 A ist ein Druckregel- und Absperrrventil beschrieben, welches als Absperrventil oder als Druckregelventil zur Aufrechterhaltung eines konstanten Druckes arbeiten kann.

Die US 6,178,997 B1 beschreibt einen Druckregler zum Steuern des Drucks eines Prozeßfluids, bei dem ein selektiv bewegbares Drosselelement in einem Durchflußkanal angeordnet ist, mit einer Federlast, um das Drosselelement in einer Referenzposition vorzuspannen, und mit einer Rückführung zum Zuführen von Prozeßfluid, um das Drosselelement zu positionieren. Das Drosselelement wird so positioniert, dass der Fluiddurchfluß durch den Durchflußkanal in Abhängigkeit von einem vorgestimmten Druck des Prozeßfluids an einer Seite des Reglers blockiert wird. Eine genauere Druckregelung durch eine erhöhte Auflösung ist hier jedoch nicht möglich.

Der vorliegenden Erfindung liegt die Aufgabe zugrunde ein Druckregelventil darzustellen, das eine genaue Druckregelung durch eine erhöhte Auflösung ermöglicht. Im durchgeschalteten Zustand darf weiterhin der Versorgungsdruck nicht so hoch werden, daß es zu einem Herausdrücken des Ankers aus seiner Halteposition kommen kann. Um eine sichere Funktion zu gewährleisten, muß ein Durchschalten hoher Versorgungsdrücke jederzeit bei reduzierter Leckage möglich sein. Weiterhin soll sich das Druckregelventil durch Robustheit, Schwingstabilität und eine reduzierte Bauteilezahl auszeichnen.

Die der Erfindung zugrundeliegende Aufgabe wird durch ein, auch die kennzeichnenden Merkmale des Hauptanspruchs aufweisendes, gattungsgemäßes Druckregelventil gelöst.

Das Druckregelventil wird so ausgelegt, daß eine Druckregelung nur im tatsächlich notwendigen Bereich erfolgt, d. h. das Druckregelventil hat nur im Bereich der zu regelnden Drücke die Funktion eines Regelventils. Oberhalb dieses tatsächlich notwendigen Regelbereichs wird durch ein Ventil der rückgeführte Regeldruck auf den maximalen Regeldruck begrenzt oder ganz abgeschaltet. Das Druckregelventil arbeitet nun als Schaltventil. Es bleibt, unabhängig vom anliegenden Versorgungsdruck und Arbeitsdruck, geöffnet. Die Rückstellung des Druckregelventils erfolgt durch Federkraft und die aus dem rückgeführten Regeldruck resultierende Druckkraft. Durch die Kombination der Eigenschaften eines Regel- und eines Schaltventils kann einerseits der Regelbereich feiner aufgelöst werden, was zu einer besseren Einstellbarkeit führt, und andererseits können hohe Versorgungsdrücke problemlos durchgeschaltet werden. Wird der Strom über den Regelbereich hinaus weiter erhöht, so wird der Regeldruck, beispielsweise über ein Druckbegrenzungsventil oder über ein Druckreduzierventil, automatisch auf den maximalen Regeldruck eingestellt und dort gehalten. Hierbei entsteht ein Überschuss an Magnetkraft, was zu einem Öffnen der Versorgungsdruck-Steuerkante am Ventilschieber führt. Dieser erreicht eine Endstellung. Der Versorgungsdruck liegt in voller Höhe an der Arbeitsleitung an. Somit kann der Versorgungsdruck frei variiert werden, ohne daß sich dies auf die Stellung des Ventilschiebers auswirkt. Da der Ventilschieber nicht an der Steuerkante anliegt, kann durch diese Lösung die Leckage deutlich reduziert werden.

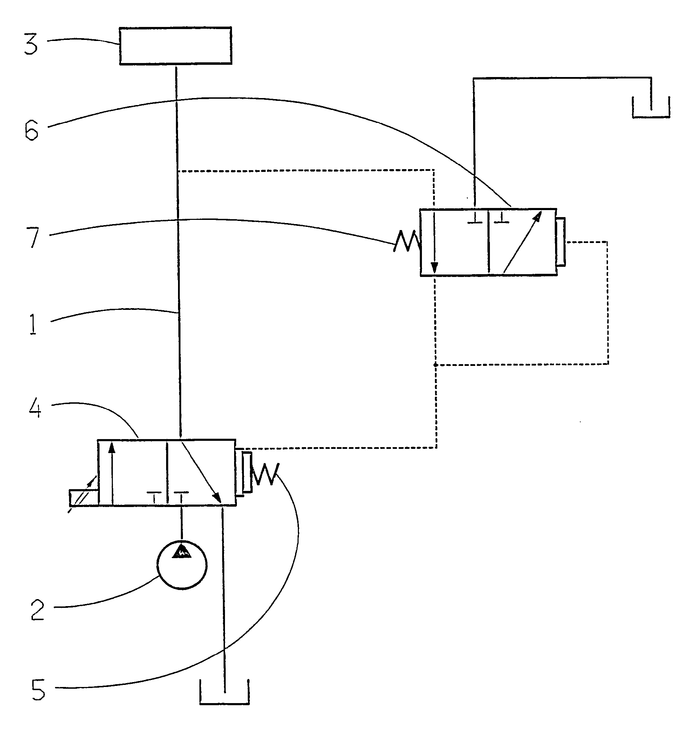

Nachfolgend wird die Erfindung anhand eines in der Figur dargestellten Ausführungsbeispieles näher erläutert.

Die einzige Figur zeigt ein hydraulisches Ersatzschaltbild eines erfindungsgemäßen Druckregelventils. Das erfindungsgemäße Druckregelventil weist eine Arbeitsleitung 1 auf, über die Druckmedium von einer Pumpe 2 zu einem Verbraucher 3 gefördert werden kann. Ein Wegeventil 4 kann gegen die Kraft einer Feder 5 geschaltet werden. Wird das Wegeventil 4 geschaltet, fördert die Pumpe 2 Druckmedium zum Verbraucher 3. Über ein Druckreduzierventil 6 wird ein Regeldruck zu dem Wegeventil 4 zurückgeführt. Ist der Regeldruck kleiner als der maximal zulässige Regeldruck, bleibt das Wegeventil 4 in seiner Position. Wird der Wert des maximal zulässigen Regeldrucks jedoch überschritten, wird das Druckreduzierventil 6 gegen die Kraft einer Feder 7 und das Wegeventil 4 mit Hilfe der Feder 5 zurückgeschaltet.

### Bezugszeichen

- 1: Arbeitsleitung
- 2: Pumpe
- 3: Verbraucher
- 4: Wegeventil
- 5: Feder
- 6: Druckreduzierventil
- 7: Feder

## Patentansprüche

1. Verfahren zur Regelung eines Drucks, beispielsweise in einem Schaltelement eines Getriebes, durch ein Druckregelventil (4) mit einem Steuerelement mit Steuerkanten zum Öffnen und Schließen von Spalten, das durch einen Proportionalmagneten gesteuert wird, wobei das Druckregelventil (4) eine Regelfunktion sowie eine Haltefunktion aufweist, **dadurch gekennzeichnet, dass** die Rückstellung des Druckregelventils (4) aus der Haltefunktion in die Regelfunktion durch Rückführung eines Regeldrucks über ein Druckreduzierventil (6) erreicht wird.

2. Verfahren nach Anspruch 1, **dadurch gekennzeichnet, dass** das Druckreduzierventil (6) den rückgeführten Regeldruck auf das Druckregelventil (4) auf den maximalen Regeldruck begrenzt oder ganz abgeschaltet.

3. Verfahren nach einem der vorhergehenden Ansprüche, **dadurch gekennzeichnet, dass** die Rückstellung des Druckregelventils (4) durch die Kraft einer Feder (5) und der aus dem rückgeführten Regeldruck resultierenden Druckkraft erfolgt.

4. Verfahren nach einem der vorhergehenden Ansprüche, **dadurch gekennzeichnet, dass** durch das Druckreduzierventil (6) automatisch der maximal zulässige Druck eingestellt und gehalten wird.

## Claims

1. Method for regulating a pressure, for example in a shifting element of a transmission, by means of a pressure regulation valve (4) with a control element with control edges for opening and closing gaps, which is controlled by a proportional magnet, wherein the pressure regulation valve (4) has a regulating function as well as a holding function, **characterised in that** the pressure regulation valve (4) is reset from the holding function to the regulating function by feeding back a regulation pressure via a pressure reducing valve (6).

2. Method according to Claim 1, **characterised in that** the pressure reducing valve (6) limits the regulation pressure which is fed back to the pressure regulation valve (4) to the maximum regulation pressure or completely disconnects this.

3. Method according to any one of the preceding Claims, **characterised in that** the pressure regulation valve (4) is reset by the force of a spring (5) and the compressive force resulting from the regulation pressure which is fed back.

4. Method according to any one of the preceding Claims, **characterised in that** the maximum permissible pressure is automatically adjusted and held by the pressure reducing valve (6).

## Revendications

1. Procédé pour assurer la régulation d'une pression, par exemple dans un élément de commande de changement dans une boîte de vitesses, au moyen d'une soupape de régulation de pression (4), laquelle comprend un élément de commande qui possède des arêtes de commande pour l'ouverture et la fermeture de fentes et qui est commandé par un électro-aimant proportionnel, dans lequel la soupape de régulation de pression (4) assure une fonction de régulation ainsi qu'une fonction de maintien, **caractérisé en ce que** le rappel de la soupape de régulation de pression (4) de la fonction de maintien à la fonction de régulation est obtenu par le renvoi d'une pression de régulation par l'intermédiaire d'une soupape de réduction de pression (6).

2. Procédé selon la revendication 1, **caractérisé en ce que** la soupape de réduction de pression (6) limite la pression de régulation renvoyée à la soupape de régulation de pression (4) à la pression de régulation maximale, ou la coupe entièrement.

3. Procédé selon l'une des revendications précédentes, **caractérisé e**n ce que le rappel de la soupape de régulation de pression (4) s'effectue par la force d'un ressort (5) et par la force de pression qui résulte de la pression de régulation renvoyée.

4. Procédé selon l'une des revendications précédentes, **caractérisé e**n ce que la pression maximale admissible est réglée et maintenue automatiquement par la soupape de réduction de pression (6).
